Europäisches Patentamt

European Patent Office

Office européen des brevets

(19)

(11) Veröffentlichungsnummer: **0 224 689 B1**

# (12) EUROPÄISCHE PATENTSCHRIFT

(45) Veröffentlichungstag der Patentschrift: **18.09.91**

(51) Int. Cl.⁵: **H02H 5/04**, H02H 7/08

(21) Anmeldenummer: **86114190.1**

(22) Anmeldetag: **14.10.86**

(54) **Vorrichtung zur Temperaturüberwachung von Gleichstromnebenschlussmotoren an Rotationsdruckmaschinen.**

(30) Priorität: **13.11.85 DE 3540166**
**26.09.86 DE 3632671**

(43) Veröffentlichungstag der Anmeldung:
**10.06.87 Patentblatt 87/24**

(45) Bekanntmachung des Hinweises auf die
Patenterteilung:
**18.09.91 Patentblatt 91/38**

(84) Benannte Vertragsstaaten:
**DE FR GB IT NL SE**

(56) Entgegenhaltungen:
**DD-A- 108 419**
**DE-A- 2 833 286**
**DE-A- 3 316 350**
**DE-C- 941 861**
**US-A- 4 547 826**

(73) Patentinhaber: **Heidelberger Druckmaschinen**
**Aktiengesellschaft**
**Kurfürsten-Anlage 52-60 Postfach 10 29 40**
**W-6900 Heidelberg 1(DE)**

(72) Erfinder: **Krüger, Michael**
**Zeisigweg 1**
**W-6803 Edingen Neckarhausen(DE)**

(74) Vertreter: **Stoltenberg, Baldo Heinz-Herbert et**
**al**
**c/o Heidelberger Druckmaschinen AG**
**Kurfürsten-Anlage 52-60**
**W-6900 Heidelberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Temperaturüberwachung eines Gleichstromnebenschlußmotors zum Antrieb von Rotationsdruckmaschinen gemäß dem Oberbegriff des Anspruchs 1.

Aus der DE-OS 28 33 286 ist es bekannt, einen Gleichstrommotor mit einer Vorrichtung zur Temperaturüberwachung zu versehen. Hierzu wird mit Spannungsabfühlmitteln der Widerstandsspannungsabfall an der Feldwicklung bestimmt, der infolge des Stromflusses in der Wicklung auftritt. Durch einen Vergleich des gemessenen Spannungsabfalls mit einer Vergleichsspannung kann die Temperatur der Feldwicklung ermittelt werden. Der Motor wird abgeschaltet, wenn die Temperatur ein vorbestimmtes Maß übersteigt. Unter diesen Voraussetzungen und der Annahme, daß Funktionsstörungen des Antriebes erkannt werden, wie z.B. Feldausfall, oder daß der Motor blockiert, kann die Statortemperatur als ausreichendes Kriterium für die gesamte Erwärmung des Gleichstromnebenschlußmotors angesehen werden.

Ein Nachteil dieser Einrichtung ist jedoch darin zu sehen, daß beispielsweise der Ausfall der Motorkühlung erst dann festgestellt werden kann, wenn die Temperatur dieses vorbestimmte Maß überschritten hat. Die relativ späte Erkennung eines Ausfalls der Kühlung kann jedoch schon zu einer örtlichen überhitzung des Motors und damit zu seiner Zerstörung geführt haben.

In der DE-OS 33 16 350 ist eine Überwachungsmöglichkeit bekannt geworden, die die Nachbildung des Temperaturverhaltens des Motors mit Hilfe eines thermischen Modells beschreibt. Über dieses Modell werden die Leiter-und die Kerntemperatur der Einrichtung ermittelt. Übersteigt die Temperatur ein vorbestimmtes Maß, wird die Stromzufuhr zu der elektrischen Einrichtung unterbrochen. Nachteilig bei dieser Lösung wirkt sich der Umstand aus, daß Veränderungen der Umgebungsbedingungen oder des Kühlmittelflusses nicht erkannt werden.

Ausgehend von diesem Stand der Technik liegt der Erfindung die Aufgabe zugrunde, eine Einrichtung zu schaffen, die in der Lage ist, bei einem Motor zum Antrieb von Rotationsdruckmaschinen das Auftreten möglicher Übertemperaturen frühzeitig zu erkennen.

Die Aufgabe wird durch die Merkmale des kennzeichnenden Teils des Anspruchs 1 gelöst.

Die Bestimmung der Motortemperatur aus der Temperatur seiner Nebenschlußwicklung und den Temperaturanstiegswerten ist insbesondere bei einem Motor einer Druckmaschine vorteilhaft. Denn hohe Beschleunigungs- oder Überlastmomente, die über dem Nennmoment liegen, treten bei einer solchen Maschine nicht auf.

Zur Abspeicherung der maximalen Temperaturanstiegswerte bestehen prinzipiell mehrere Möglichkeiten. Eine vorteilhafte Möglichkeit ist darin zu sehen, daß der zulässige maximale Temperaturanstiegswert in einem Probe- bzw. Testlauf ermittelt und dann abgespeichert wird. Eine weitere Möglichkeit besteht darin, den Temperaturanstiegsverlauf nach jedem Einschalten des Motors aus dem kalten Zustand heraus immer wieder neu zu bestimmen und die maximalen Temperaturanstiegswerte für einen bestimmten Temperaturbereich abzuspeichern.

Der maximale Temperaturanstiegsverlauf, der nach einer dieser Möglichkeiten ermittelt wurde, wird in der Vergleichseinrichtung mit dem momentanen Temperaturanstieg verglichen und es wird ein Warnsignal abgegeben, falls der momentane Temperaturanstieg größer als der abgespeicherte Wert ist. Das Warnsignal führt beispielsweise dazu, daß der Gleichstromnebenschlußmotor abgeschaltet oder eine andere Maßnahme zum Schutz des Antriebs, beispielsweise eine Drehzahlverringerung, vorgenommen wird.

In einer Weiterbildung der erfindungsgemäßen Vorrichtung ist vorgesehen, die zulässige Maximaltemperatur in Abhängigkeit von der Drehzahl zu überwachen. Diese Ausführung ist insbesondere dann sinnvoll, wenn die Kühlung des Motors nicht konstant, sondern abhängig von der Drehzahl ist, wie dies bei selbstbelüfteten Motoren mit Axiallüftern der Fall ist. Zur Realisierung dieser Ausführungsform muß der Steuerung die Information über die Drehzahl oder über eine andere, mit der Drehzahl verknüpfte Größe, z. B. die Ankerspannung, zugeführt werden.

Nachfolgend wird anhand von Ausführungsbeispielen die Erfindung näher erläutert.

Es zeigt:

Fig. 1    ein Ersatzschaltbild einer Nebenschlußwicklung,

Fig. 2    eine Schaltung zur Speisung einer Nebenschlußwicklung mit konstantem Feldstrom, mit einer Auswerteschaltung zur Ermittlung eines temperaturproportionalen Signals,

Fig. 3a,b    die Temperaturverteilung in einem Motor bei Normalbetrieb und bei Ausfall einer Kühleinrichtung,

Fig. 4    den zeitlichen Verlauf einer Motortemperatur,

Fig. 5    die Motortemperaturüberwachung anhand eines Flußdiagramms.

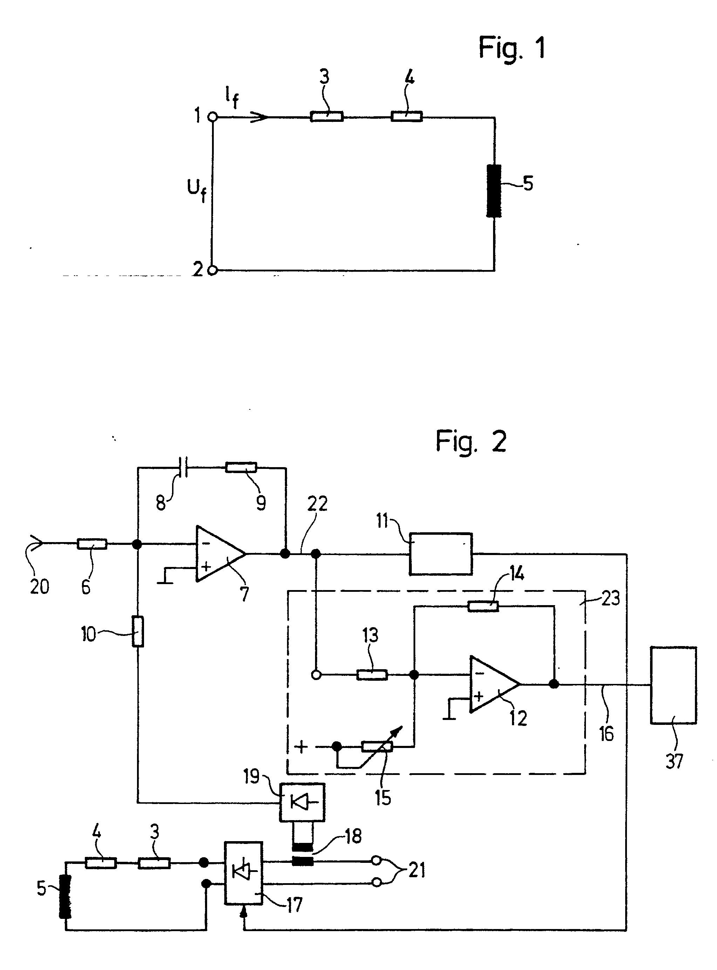

Das in Fig. 1 dargestellte Schaltbild stellt das Ersatzschaltbild zur Felderregung eines Gleichstromnebenschlußmotors dar. Der vorgegebene Feldstrom $I_f$ (f = Feld) fließt vom Anschlußpunkt 1 über Widerstand $R_v3$, der die Summe aller zwischen der Nebenschlußwicklung und der Feldstromquelle liegenden Leitungswiderstände darstellt, über den Widerstand der Nebenschlußwicklung $R_f4$ und die Induktivität $L_f5$ der Nebenschlußwicklung zum Anschlußpunkt 2.

Bei einem bestimmten, konstanten Feldstrom $I_f$ und einer Bezugstemperatur stellt sich eine bestimmte, durch die bekannten Größen der Widerstände $R_v$ und $R_f$ gegebene Spannung $U_f$ ein. Durch die Erwärmung des Gleichstromnebenschlußmotors um eine bestimmte Temperatur $\Delta Tx$ steigt der Wicklungswiderstand auf

$$Rfx = Rf (1 + \Delta Tx \cdot \alpha)$$

und damit steigt die Spannung $U_f$ auf den Wert

$$Ufx = (Rv + Rfx) \cdot I_f$$

Durch Messung der Feldspannung läßt sich die Temperaturerhöhung bestimmen. Mit der in Fig. 2 dargestellten und nachfolgend näher beschriebenen Auswerteschaltung als Ausführungsbeispiel läßt sich ein temperaturproportionales Signal ermitteln. Die in Fig. 2 abgebildete Schaltung besteht aus der Feldstromregelschaltung, wie sie in bekannter Weise bei Anwendungen mit konstantem Feldstrom eingesetzt wird, und der zur Erzeugung eines temperaturproportionalen Signals erforderlichen Zusatzschaltung 23. Der Felderregungskreis des Nebenschlußmotors 3, 4, 5 wird von einer steuerbaren Gleichstromquelle, in diesem Fall z. B. von einem steuerbaren Wechselstrom-Brückengleichrichter 17, gespeist. Dazu wird am Eingang der Feldstromregelschaltung ein Spannungs-Sollwert 20 vorgegeben, der über einen Bewertungswiderstand 6 einer PI-Reglerschaltung 7, 8, 9 zugeführt wird. Weiterhin erhält die PI-Reglerschaltung über den bewerteten Widerstand 10 Informationen über die Hohe des Feldstrom-Istwertes mit umgekehrten Vorzeichen, der mit Hilfe eines Stromwandlers 18 und anschließender Gleichrichtung 19 gewonnen worden ist.

Aus der Differenz von Soll- und Istwert erzeugt die PI-Reglerschaltung in bekannter Weise ein Ausgangssignal 22, das zur Ansteuerung des nachfolgenden Impulssteuersatzes 11 dient. Dieser Impulssteuersatz arbeitet in bekannter Weise nach dem Prinzip der Sinus-Vertikalsteuerung und dient zur Erzeugung der Zündimpulse für die nachfolgende Brückengleichrichterschaltung 17. Bei dem verwendeten Steuerverfahren ist die Ausgangsgleichspannung unabhängig von Netzspannungsschwankungen proportional zur Steuerspannung 22. Damit ist die Steuerspannung ein Maß für die Feldspannung $U_f$. Zur Erzeugung eines temperaturproportionalen Signals wird die Steuerspannung über einen Bewertungswiderstand 13 einer Additionsschaltung zugeführt, die aus einem Verstärker 12 mit einstellbarer Verstärkung 14 besteht. Zur negativen Steuerspannung wird ein mit einem Potentiometer 15 einstellbarer positiver Spannungswert addiert. Mit Hilfe des Potentiometers wird bei dem verwendeten Gleichstromnebenschlußmotor im kalten Zustand (Raumtemperatur) einmalig die Additionsschaltung abgeglichen. Der Abgleich erfolgt zweckmäßigerweise derart, daß im kalten Zustand des Motors die Ausgangsspannung des Verstärkers 12 auf 0 gestellt wird.

Durch Erwärmung des Motors wird der Widerstand 4 der Nebenschlußwicklung erhöht. Dadurch wird bei gegebener Feldspannung der Feldstrom $I_f$ und damit die Istwertspannung reduziert, wodurch die Steuerspannung am Ausgang des Operationsverstärkers 7 ansteigt. Als Folge davon wird die Feldspannung erhöht, und der Feldstrom wird auf seinen ursprünglichen Wert ausgeregelt. Als Ergebnis des erhöhten Innenwiderstandes steigt die Steuerspannung und damit die Ausgangsspannung 16 des Verstärkers 12 an.

Selbstverständlich ist der Erfindungsgedanke auch auf andere Ausführungsformen von Schaltungen und Steuerverfahren zur Feldstromversorgung übertragbar, wie z.B. taktweise arbeitende Feldstromsteller, halb- und vollgesteuerte Brückenschaltungen usw. Ebenso läßt sich der Erfindungsgedanke auch auf Anwendungen übertragen, bei denen die Feldwicklung des Gleichstrom-Nebenschlußmotors mit Konstantspannung versorgt wird.

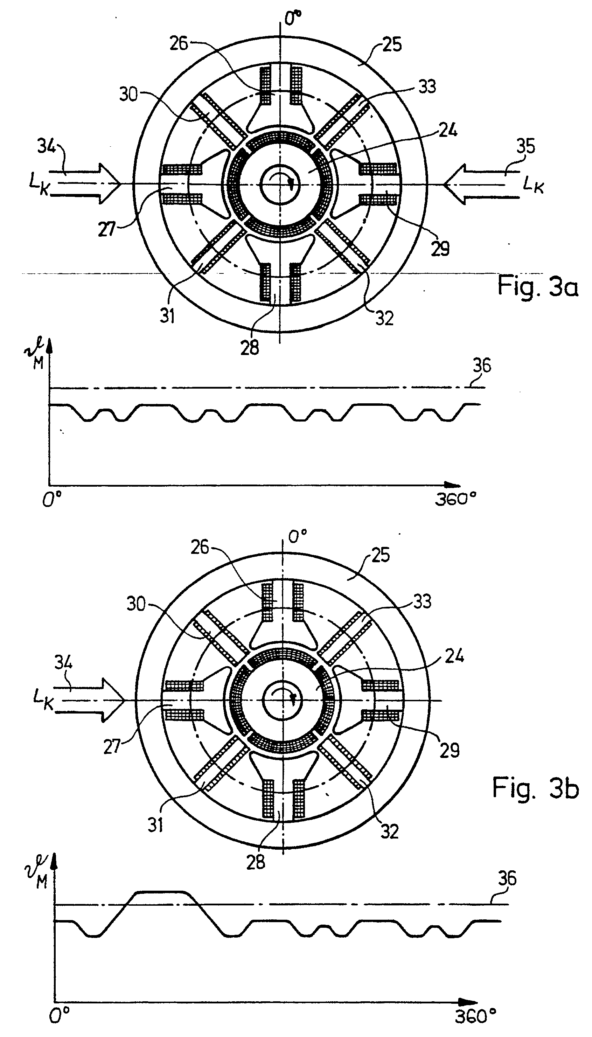

Figur 3 zeigt einen Schnitt durch einen Gleichstromnebenschlußmotor mit einem Rotor 24, einem Stator 25 und darauf befindlichen Hauptpolen 26 bis 29 und Wendepolen 30 bis 33.

Dieser Motor wird während des Betriebs mit Kühlluft $L_K$ versorgt (in der Figur durch die Pfeile 34 u. 35 angedeutet). Die Motortemperatur entlang der strichpunktierten Linie, innherhalb des Motors, ist in dem zugehörigen Temperaturdiagramm aufgezeichnet. Dieses Temperaturdiagramm stellt eine Abwicklung des Stators entlang der strichpunktierten Linie dar. Die Ordinate des Diagramms zeigt die Motortemperatur an. Diese Motortemperatur darf eine Störschwelle 36, die die obere zulässige Grenztemperatur darstellt nicht überschreiten. Tritt beispielsweise eine Störung der Motorkühlung ein, wie in Figur 3 b dargestellt - in diesem Fall ist nur noch die Luftkühlung Teil 34 vorhanden - dann zeigt das Temperaturdiagramm im Bereich des Hauptpols 29 eine Temperaturüberhöhung die oberhalb der Störschwelle 36 liegt. Wird bei einer Temperaturermittlung nur die mittlere Motortemperatur aus der Feldspannung bestimmt, dann wäre es denkbar, daß bei einer lokalen Überschreitung der Störschwelle diese nicht erkannt wird oder der Motor bereits geschädigt ist, bevor die Gesamttemperatur des Motors die Störschwelle überschreitet. Eine solche lokale Störung kann aber auch dazu führen, daß die Gesamttemperatur nur unwesentlich angehoben wird, die Störung jedoch trotzdem zu einer Schädigung des Motors führt. Es hat sich als vorteilhaft erwiesen, zur Vermeidung solcher Störfälle den Anstieg der Feldspannung des Motors zu ermitteln und daraus den Anstieg der Motortemperatur auszuwerten. Hierzu wird beispielsweise mit einer Auswerteschaltung 37, die der Zusatzschaltung 23 nachgeschaltet ist, der Anstieg der Feldspannung pro Zeiteinheit gemessen, und mit einem zulässigen maximalen Temperaturanstieg verglichen. Der maximal zulässige Temperaturanstieg kann durch verschiedene Verfahren festgelegt und in einem Speicher abgelegt werden.

Beispielsweise ist es möglich diesen Wert durch experimentelle Messungen festzustellen.

Eine weitere Möglichkeit sieht vor, den Temperaturanstieg nach jedem Einschalten aus dem kaltem Zustand heraus zu ermitteln. Dabei wird von den Einsatzbedingungen wie sie für Druckmaschinenantriebsmotoren vorliegen ausgegangen. Dazu zählt die Annahme, daß der Antriebsmomentenbedarf der Druckmaschine ca. 50 bis 100 % des Nennmoments im gesamten Drehzahlbereich und bei allen Temperatur- und Lastschwankungen beträgt. Dazu zählt weiterhin die Annahme, daß die Temperaturänderung der Umgebung der Druckmaschine bzw. des Motors beim ersten Einschalten des Antriebs klein ist gegenüber der Temperaturerhöhung des Motors. Während die Änderungsgeschwindigkeit der Umgebungstemperatur nur wenige Grad pro Stunde ausmacht, beträgt die Temperaturerhöhung des Motors beispielsweise 60-80° pro Stunde. Anhand dieser Annahmen kann eine maximal zulässige Temperaturanstiegskurve ermittelt werden.

Der nach einer der genannten Möglichkeiten ermittelte maximale Temperaturanstiegswert, wird während des Motorbetriebs mit den jeweils augenblicklich vorhandenen Temperaturanstiegswerten verglichen und für den Fall, daß der augenblickliche Temperaturanstieg höher als der vorher festgelegte maximale Temperaturanstieg ist, ein Warnsignal erzeugt oder eine Abschaltung veranlasst. Außerdem besteht bei der Auswertung des momentanen Temperaturanstiegs die Möglichkeit, den zu erwartenden Temperaturendwert zu errechnen. Dabei kann durch mindestens zwei Messungen der Endwert der Erwärmungskurve, die näherungsweise nach der e-Funktion verläuft, bestimmt werden. Falls sich durch diese Rechnung ein zu hoher Wert ergibt, kann frühzeitig eine Warnmeldung abgegeben bzw. eine Schutzmaßnahme z.B. durch eine verstärkte Kühlung des Motors durchgeführt werden.

Zur Überwachung der Temperatur des Motors reicht es, im speziellen Fall des Druckmaschinen-Hauptantriebs, völlig aus, wenn ein Vergleich des momentanen Temperaturanstiegs mit dem vorher festgelegten Wert erst dann durchgeführt wird, wenn eine bestimmte untere Grenztemperatur überschritten ist.

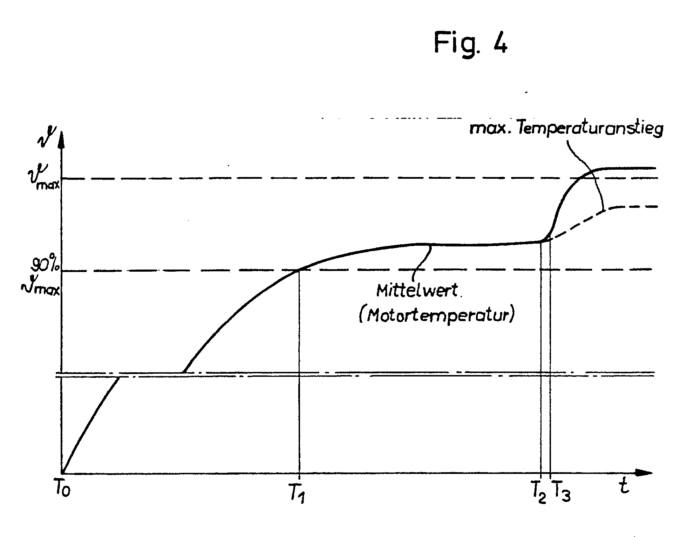

In dem Diagramm gemäß Figur 4 ist eine typische Motorerwärmungskurve über der Zeit dargestellt. Diese stellt den Mittelwert der Motortemperatur dar. Zum Zeitpunkt TO wird der Motor gestartet und die Motortemperatur steigt annähernd nach dem Verlauf einer e-Funktion an. Zum Zeitpunkt T1 überschreitet die Motortemperatur eine untere Grenztemperatur (90 % $\vartheta$ max.). Bei dieser Temperatur wird die Aktivierung der Überwachung vorgenommen, d.h. ab diesem Zeitpunkt wird die momentane Temperaturerhöhung mit dem vorher festgelegten maximalen Temperaturerhöhungswert verglichen.

Zum Zeitpunkt T2 erhöht sich die mittlere Motortemperatur beispielsweise durch Ausfall eines Kühlelements sehr stark und überschreitet die maximal mögliche Temperaturerhöhung. Dies erzeugt unmittelbar (zum Zeitpunkt T3) ein Warnsignal, so daß rechtzeitig Maßnahmen zur Behebung der Störung unternommen werden können und die mittlere Motortemperatur nicht bis zur Abschaltschwelle ($\vartheta$ max.) ansteigen kann. Diese Maßnahme schließt somit aus, daß lokale Temperaturerhöhungen im Motor, die über der mittleren Motortemperatur liegen, in keinem Fall über die Abschaltschwelle gelangen und zu einer Zerstörung des Motors führen. Die maximal mögliche Temperaturerhöhung ist, wie aus der Figur ersichtlich immer so bemessen, daß der Endwert der Temperatur einen sicheren Abstand zur Abschaltschwelle ($\vartheta$ max.) aufweist.

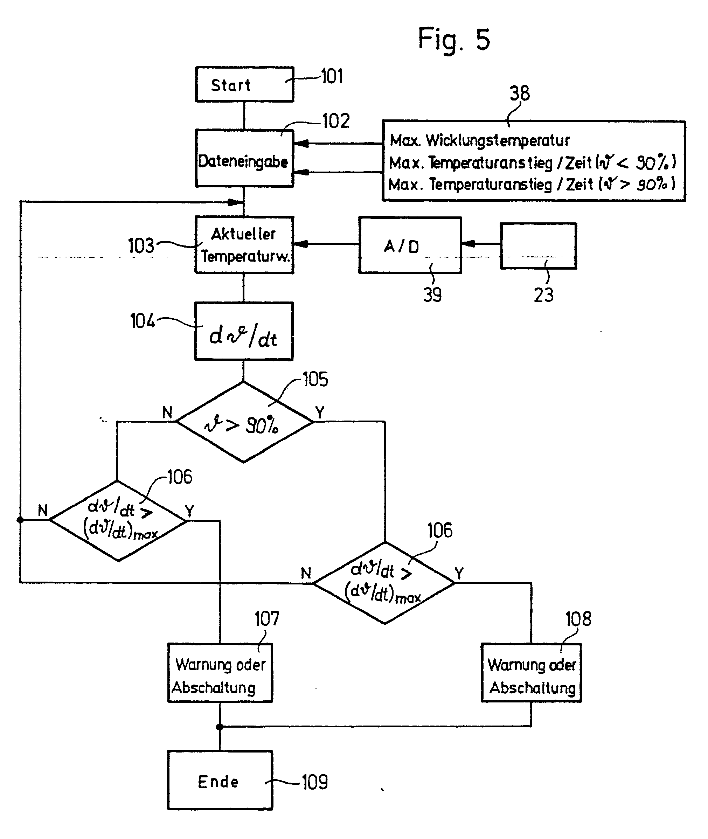

Die Figur 5 zeigt ein Ablaufdiagramm, welches die Arbeitsweise der Vergleichseinrichtung 37 verdeutlicht. Nach einem Startsignal (101) erfolgt eine Dateneingabe (102). Dieser Dateneingabe werden von einer Speichereinrichtung 38 die maximale Temperatur $\vartheta$ max (entsprechend der Isolierklasse), der maximale Temperaturanstieg pro Zeit unterhalb der Temperaturschwelle bei 90 % der maximalen Temperatur erreicht wird, und ein anderer maximaler Temperaturanstieg pro Zeit zwischen der Schwelle bei 90 % der maximalen Temperatur erreicht ist und der Abschaltschwelle zugeführt. Die von der Schaltung 23 gemessene mittlere Motortemperatur wird über einen A/D-Wandler 39 als aktueller Temperaturwert zur Verfügung gestellt (Anweisung 103) und aus diesem aktuellen Temperaturwert in der Anweisung 104 das Differenzial nach der Zeit gebildet. Es stehen somit die von der Speichereinrichtung 38 zur Verfügung gestellten Daten, die momentane Temperatur und der momentane Temperaturanstieg zur Verfügung. In der Abfrage 105 wird festgestellt, ob die momentane Temperatur oberhalb oder unterhalb der 90 %-Schwelle liegt. Es sei hier anzumerken, daß diese Schwelle willkürlich gewählt ist und je nach Anforderung an die Sicherheit des Motors beliebig festgelegt werden kann. Liegt die momentane Temperatur unterhalb dieser Schwelle, dann wird in einer nachfolgenden Abfrage 106 der momentane Temperaturanstieg mit dem in diesem Bereich geltenden maximalen Temperaturanstieg verglichen und bei einem zu hohen momentanen Temperaturanstieg über die Anweisung 107 eine Warnung ausgegeben oder der Motor abgeschaltet. Liegt kein Störfall vor, d.h. der momentane Temperaturanstieg ist normal, dann wird der Zyklus der Bestimmung der aktuellen Temperatur (Anweisung 103) und der nachfolgenden Berechnung wiederholt. Liegt die momentane Temperatur über der 90 % Schwelle, dann folgt der Abfrage 105 die Abfrage 106 in welcher durch Vergleich des momentanen Temperaturanstiegs mit dem abgespeicherten in diesem Bereich geltenden Temperaturanstieg ebenfalls eine Störung bzw. eine ordungsgemäße Funktion erkannt wird. Bei Störung wird über die Anweisung 108 eine Abschaltung des Motors erzeugt, bei einer normalen Temperaturerhöhung wird der Zyklus mit einer neuen Bestimmung der aktuellen Temperatur wiederholt. Selbstverständlich ist es auch möglich, den Temperaturanstiegsvergleich unterhalb der 90 % Schwelle nicht durchzuführen.

Ebenso besteht auch die Möglichkeit unterschiedliche Überwachungsarten zu kombinieren, beispielsweise die mittlere Motortemperatur unabhängig von dem Anstiegsverlauf zu überwachen um somit die Sicherheit der Einrichtung zu erhöhen. Die Abschaltschwelle, bzw. die maximale Temperatur des Motors kann ebenso wie die 90 %-Schwelle beliebig festgelegt werden. Üblicherweise ist diese jedoch durch die Isolierklasse des Motors festgelegt.

**Patentansprüche**

1. Vorrichtung zur Temperaturüberwachung eines Gleichstromnebenschlußmotors zum Antrieb von Rotationsdruckmaschinen, wobei eine Nebenschlußwicklung des Gleichstrommotors als Temperaturfühler benutzt wird, **dadurch gekennzeichnet,** daß die Auswerteschaltung (37) die momentanen Temperaturwerte und die Temperaturanstiegswerte pro Zeiteinheit ($d\vartheta/dt$) in der Nebenschlußwicklung bei konstantem Erregerstrom ($I_f$) oder bei konstanter Erregerspannung ($U_f$) ermittelt, daß in einer Speichereinrichtung (38) die Kurve der maximalen Temperaturanstiegswerte pro Zeiteinheit ($d\vartheta_{max}/dt$) für einen bestimmten Temperaturbereich bei Normalbetrieb des Gleichstromnebenschlußmotors gespeichert ist und daß die Auswerteschaltung (37) die momentanen Temperaturwerte ($\vartheta$) mit einer Temperaturschwelle vergleicht sowie die Temperaturanstiegswerte ($d\vartheta/dt$) mit den entsprechenden gespeicherten maximalen Temperaturanstiegswerten ($d\vartheta_{max}/dt$) für diese Temperaturschwelle vergleicht und bei einer Überschreitung der maximalen Temperaturanstiegswerte ($d\vartheta_{max}/dt$) die Ausgabe eines Warnsignales oder das Abschalten des Gleichstromnebenschlußmotors veranlaßt.

2. Vorrichtung nach Anspruch 1, **dadurch gekennzeichnet,** daß die abgespeicherten Temperaturanstiegswerte pro Zeiteinheit anhand eines Testlaufs unter Normalbedingungen bestimmt werden.

3. Vorrichtung nach Anspruch 1, **dadurch gekennzeichnet,** daß die Drehzahl des Gleichstromnebenschlußmotors bei überschreiten eines bestimmten Temperaturanstiegswertes ($d\vartheta_{max}/dt$) abgesenkt wird.

4. Vorrichtung nach Anspruch 1, **dadurch gekennzeichnet,** daß der abgespeicherte Temperaturanstiegsverlauf ($d\vartheta_{max}/dt$) anhand der Motorkenndaten bestimmt ist.

5. Vorrichtung nach Anspruch 1, **dadurch gekennzeichnet,** daß der Temperaturanstiegswert ($d\vartheta_{max}/dt$) drehzahlabhängig ist.

**Claims**

1. Device for monitoring the temperature of a DC shunt-wound motor for driving rotary printing machines, a shunt winding of said DC motor being used as a temperature sensor, characterized in that an evaluation circuit (37) determines the instantaneous temperature values and the temperature increase values per unit time $d\vartheta/dt$ in the shunt winding given a constant exciting current ($I_f$) or a constant exciting voltage ($U_f$). that for a defined temperature range, during normal operation of the DC shunt-wound motor, the curve of the maximum temperature increase values pro unit time ($d\vartheta_{max}/dt$) is stored in a storage device (38), and that said evaluation circuit (37) compares the instantaneous temperature values ($\vartheta$) with a temperature threshold, and the temperature increase values ($d\vartheta/dt$) with the respective stored maximum temperature increase values ($d\vartheta_{max}/dt$)

for said temperature threshold, and causes the generation of a warning signal or the switching off of the DC shunt-wound motor when the maximum temperature increase values $(d\vartheta_{max}/dt)$ are exceeded.

2. Device according to Claim 1,
characterized in
that the stored temperature increase values per unit time are determined in a test run under standard conditions.

3. Device according to Claim 1,
characterized in
that the rotary speed of said DC shunt-wound motor is reduced when exceeding a certain temperature increase value $(d\vartheta_{max}/dt)$.

4. Device according to Claim 1,
characterized in
that the stored temperature increase curve $(d\vartheta_{max}/dt)$ is determined by means of motor characteristics.

5. Device according to Claim 1,
characterized in
that the temperature increase value $(d\vartheta_{max}/dt)$ depends on the rotary speed.

## Revendications

1. Dispositif pour contrôler la température d'un moteur en dérivation à courant continu pour l'entraînement de machines à imprimer rotatives, un enroulement en dérivation du moteur à courant continu étant utilisé comme capteur de température,
**caractérisé** en ce que le montage évaluateur (37) détermine les valeurs momentanées de température et les valeurs de hausse de température par unité de temps $(d\theta/t)$ dans l'enroulement en dérivation à une intensité d'excitation constante $(I_f)$ ou à une tension d'excitation constante $(U_f)$, en ce que la courbe des valeurs maximales de hausse de température par unité de temps $(d\theta_{max}/dt)$, pour une plage de températures donnée en fonctionnement normal du moteur en dérivation à courant continu, est mémorisée dans un dispositif de mémorisation (38), et en ce que le montage évaluateur (37) compare les valeurs momentanées de température $(\theta)$ à un seuil de température, et compare les valeurs de hausse de température par unité de temps $(d\theta/t)$ aux valeurs maximales de hausse de température par unité de temps $(d\theta_{max}/dt)$ mémorisées correspondantes pour ce seuil de température et, en cas de dépassement des valeurs maximales de hausse de température par unité de temps $(d\theta_{max}/dt)$, provoque la délivrance d'un signal avertisseur ou la coupure du moteur en dérivation à courant continu.

2. Dispositif selon la revendication 1, caractérisé en ce que les valeurs maximales de hausse de température par unité de temps mémorisées sont déterminées à l'aide d'un fonctionnement d'essai dans des conditions normales.

3. Dispositif selon la revendication 1, caractérisé en ce que le régime du moteur en dérivation à courant continu est abaissé en cas de dépassement d'une valeur déterminée de hausse de température $(d\theta_{max}/dt)$.

4. Dispositif selon la revendication 1, caractérisé en ce que l'allure de hausse de température mémorisée $(d\theta_{max}/dt)$ est déterminée à l'aide de données caractéristiques du moteur.

5. Dispositif selon la revendication 1, caractérisé en ce que la valeur de hausse de température $(d\theta_{max}/dt)$ est fonction du régime.

## Fig. 1

## Fig. 2

Fig. 3a

Fig. 3b

# Fig. 4

# Fig. 5